## Europäisches Patentamt
## European Patent Office
## Office européen des brevets

(19)

(11) Veröffentlichungsnummer: **0 377 216 B1**

(12) **EUROPÄISCHE PATENTSCHRIFT**

(45) Veröffentlichungstag der Patentschrift: **19.10.94**

(51) Int. Cl.5: **A01B 63/112**

(21) Anmeldenummer: **89124056.6**

(22) Anmeldetag: **28.12.89**

Teilanmeldung 94105528.7 eingereicht am 28/12/89.

(54) **Steuersystem für eine Anhängevorrichtung.**

(30) Priorität: **06.01.89 US 294522**

(43) Veröffentlichungstag der Anmeldung:
**11.07.90 Patentblatt 90/28**

(45) Bekanntmachung des Hinweises auf die Patenterteilung:
**19.10.94 Patentblatt 94/42**

(84) Benannte Vertragsstaaten:
**DE FR GB IT**

(56) Entgegenhaltungen:
EP-A- 0 153 102          EP-A- 0 212 304
EP-A- 0 292 859          GB-A- 2 093 676
US-A- 4 503 916          US-A- 4 508 176
US-A- 4 518 044

(73) Patentinhaber: **DEERE & COMPANY**
**1 John Deere Road**
**Moline, Illinois 61265 (US)**

(72) Erfinder: **Boe, Thomas Eugene**
**R.R. No. 4**
**Cedar Falls Iowa 50613 (US)**
Erfinder: **Bergene, Mark Allen**
**3722 Veralta Drive**
**Cedar Falls Iowa 50613 (US)**

(74) Vertreter: **Feldmann, Bernhard et al**
**DEERE & COMPANY**
**European Office**
**Patent Department**
**D-68140 Mannheim (DE)**

## Beschreibung

Die Erfindung betrifft ein Steuersystem für eine Anhängevorrichtung eines Fahrzeuges, durch das die Arbeitstiefe eines an der Anhängevorrichtung montierten Arbeitsgerätes in Abhängigkeit von verschiedenen erfaßten und durch eine Bedienungsperson eingestellten Parametern steuerbar ist, gemäß den Merkmalen des Oberbegriffs des Patentanspruchs 1.

Es wurden verschiedene Steuersysteme für Anhängevorrichtungen vorgeschlagen. In der US-PS 3,757,868 ist beispielsweise eine inzwischen konventionelle hydromechanische Steuervorrichtung beschrieben, die relativ einfache Steuerbetätigungen aufweist, an die sich die Bedienungspersonen im Laufe der Jahre bereits gewöhnt haben. Es handelt sich um einen Steuerhebel und ein Mischsteuerpotentiometer. Die Funktionen derartiger Steuersysteme sind jedoch in bestimmter Hinsicht begrenzt. Arbeitet solch ein Steuersystem beispielsweise bei einem Zugkraft-Ansprechmodus im stationären Gleichgewichtszustand, so führen Änderungen der Einstellung des Mischungsverhältnisses zwischen Last und Tiefe zu erheblichen Änderungen der Arbeitstiefe des Arbeitsgerätes. Wünscht die Bedienungsperson eine Arbeitsweise unter Beibehaltung der ursprünglichen Tiefe, so muß sie eine zusätzliche Einstellung am Steuerhebel vornehmen. Ferner muß solch ein System kräftig auf Änderungen des Zugkraftmeßwertes ansprechen, um das Arbeitsgerät gegen den von dem Boden, durch den das Arbeitsgerät geführt wird, herrührenden Widerstand anzuheben und abzusenken. Dies erfordert ein Steuersystem mit einem relativ hohen Verstärkungsfaktor. Wird jedoch das Arbeitsgerät über dem Boden angehoben oder abgesenkt, so kann der hohe Verstärkungsfaktor bzw. die hohe Empfindlichkeit zu schnellen und abrupten Bewegungen der Anhängevorrichtung führen, mit dem Ergebnis, daß unerwünschte Vibrationen und Spannungen bei dem Gestänge und den hydraulischen Komponenten auftreten. Ferner vermindert sich bei einem konventionellen hydromechanischen System der Gesamtverstärkungsfaktor, sofern die Einstellung des Mischungsverhältnisses in Richtung steigender Empfindlichkeit hinsichtlich Änderungen der gemessenen Zugkraft verstellt wird. Die Mischeinstellung läßt sich auch so weit verstellen, daß die Empfindlichkeit über einen Bereich hinaus verstellt wird, der während der Feldarbeit tatsächlich nützlich ist.

Aus der EP-A-0 153 102 ist ein Steuersystem zur Einstellung der Arbeitstiefe von Anhängevorrichtungen gemäß den gattungsbildenden Merkmalen des Patentanspruchs 1 bekannt. Es wird vorgeschlagen, das an die Betätigungsmittel angelegte Steuersignal im wesentlichen aus einem Zugkraftfehlerwert zu bilden, der mit einem festen Faktor multipliziert, dann zu einem Lagefehlerwert addiert und hierauf mit einem Verstärkungswert multipliziert wird. Der Verstärkungswert wird unter Zuhilfenahme einer komplexen Störsignal/Fourieranalyse-Technik ermittelt und läßt sich durch eine Bedienungsperson nicht kontrolliert einstellen.

Es wurde eine Reihe von Versuchen durchgeführt, um die Leistungsfähigkeit der Steuersysteme für Anhängevorrichtungen durch die Verwendung von Elektronik und/oder Mikroprozessoren zu verbessern (US-PS 4,508,176, US-PS 4,518,044, US-PS 4,503,916). Mit Elektronik ausgerüstete Systeme wurden jedoch meistens nicht vollständig nutzbar gemacht, da hiermit eine steigende Komplexität der Bedienungseinrichtungen verbunden war. Es ist wünschenswert, ein Steuersystem für Anhängevorrichtungen zur Verfügung zu stellen, welches Bedienungseinrichtungen aufweist, die denen in konventionellen hydromechanischen Systemen ähneln, welche jedoch Leistungsvorteile aufweisen, die der Einsatz von Elektronik möglich macht.

Die mit der Erfindung zu lösende Aufgabe wird darin gesehen, ein Steuersystem für eine Anhängevorrichtung mit einfachen Bedienungselementen und einer verbesserten Leistungsfähigkeit anzugeben. Eine weitere Aufgabe der vorliegenden Erfindung wird darin gesehen, ein Steuersystem für eine Anhängevorrichtung bereitzustellen, bei dem Änderungen der Last/Tiefen-Mischeinstellung höchstens eine minimale Auswirkung auf die Arbeitstiefe während eines normalen Betriebs bei stationärer Zugsteuerung haben. Eine weitere Aufgabe der vorliegenden Erfindung wird darin gesehen, ein Steuersystem für eine Anhängevorrichtung anzugeben, durch das die Anhängevorrichtung dann, wenn das Arbeitsgerät aus dem Boden ausgehoben ist, sanft angesteuert wird und dann, wenn das Arbeitsgerät in den Boden eingreift, kräftig auf die Steuerung anspricht.

Die Aufgabe wird erfindungsgemäß durch den kennzeichnenden Teil des Anspruches 1 gelöst.

Weitere vorteilhafte Ausgestaltungen und Weiterbildungen der Erfindung gehen aus den übrigen Unteransprüchen hervor.

Gemäß der Erfindung enthält das Steuersystem für eine Anhängevorrichtung einen Zugkraftsensor, einen Anhängevorrichtungslagesensor, einen von einer Bedienungsperson betätigbaren Steuerhebel, einen Grenzwertsetzer für die obere Grenzlage der Anhängevorrichtung, einen Mischwertsetzer, einen Senkgeschwindigkeitssetzer und eine Steuereinheit, die in Abhängigkeit der Sensoren und Einstellmittel Steuersignale abgibt. Die Steuereinheit beinhaltet einen ersten (Last-) Steuerzustand, in dem die Anhängevorrichtung in Abhängigkeit einer linearen Funktion aus einer Mischung aus erfaßter Zugkraft und Lage gesteuert wird, und einen zweiten Steuerzustand, in dem die Anhängevorrichtung lediglich als nicht lineare Funktion der erfaßten Lage der Anhängevorrichtung gesteuert wird. In dem Laststeuerzustand wird ein Referenzlagewert als Sollwert verwendet, der nur den unteren Bereich der Lage der Anhängevorrichtung repräsentiert. Die sich auf das Zugkraft/Lage-Verhältnis beziehenden Werte der Empfindlichkeit und der Systemverstärkung werden von der Mischeinstellvorrichtung derart abgeleitet, daß mit steigender Empfindlichkeit auch die Systemverstärkung zunimmt. Der Empfindlichkeitswert ist begrenzt, so daß der relative Einfluß des erfaßten Zugkraftwertes gegen den erfaßten Lagewert lediglich um 0,5 bis 2,0 voneinander abweicht.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1      eine vereinfachte schematische Darstellung eines landwirtschaftlichen Schleppers, der mit der vorliegenden Erfindung ausgerüstet ist,

Fig. 2      ein elektrisches und hydrauli-sches Diagramm der vorliegen-den Erfindung,

Fig. 3a - 3j      Flußdiagramme des Algorithmus, der von dem in Fig. 2 dargestellten Mikroprozessor ausgeführt wird,

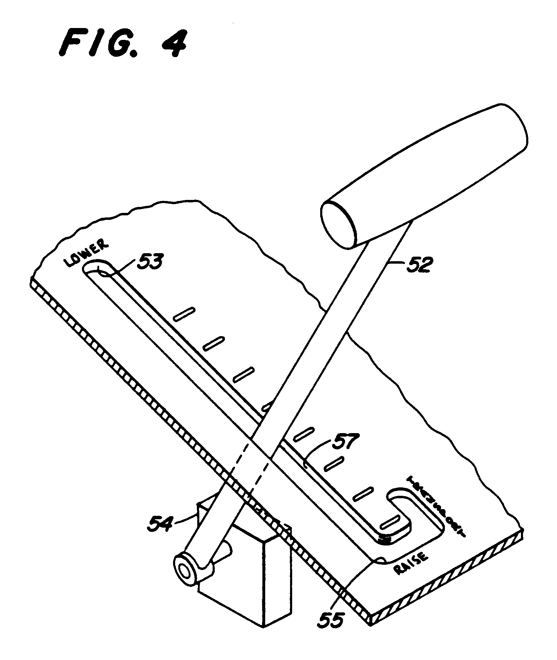

Fig. 4      die Ansicht eines in Fig. 1 ange-deuteten handbetätigbaren He-bels und

Fig. 5a - 5c      Flußdiagramme eines Unterprogramms, welches von dem in Fig. 2 dargestellten Mikroprozessor ausgeführt wird.

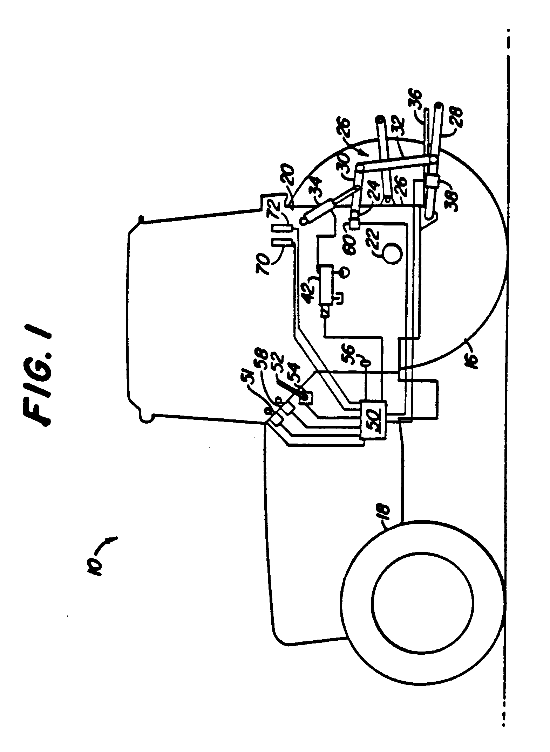

Der in Fig. 1 dargestellte Ackerschlepper 10 enthält ein rückwärtiges Gehäuse 20, welches eine Hinterradachse 22 und eine Hubwelle 24 abstützt. Eine Geräteanhängevorrichtung 26, beispielsweise eine konventionelle Dreipunktaufhängung, umfaßt Unterlenker 28, welche über Hubspindeln 32 mit Hubarmen 30 verbunden sind. Die Hubarme 30 ihrerseits sind mit der Hubwelle 24 so verbunden, daß sie eine gleichzeitige und gleichartige Bewegung sicherstellen und durch zwei parallel liegende hydraulische Hubwellenzylinder 34 angehoben und abgesenkt werden. Ein Zugpendel 36 erstreckt sich von dem Gehäuse 20 nach hinten. Der Schlepper 10 und die Geräteanhängevorrichtung 26 sind lediglich beispielhaft dargestellt. Für den Fachmann ist es ersichtlich, daß die Erfindung sich auch auf Schlepper und Anhängevorrichtungen anderer Ausbildung anwenden läßt. Beispielsweise kann die vorliegende Erfindung auch bei gelenkigen vierrad-getriebenen Schleppern oder bei Breitspurschlep-pern mit Vorderradantrieb benutzt werden.

Ein einteiliges in den Boden eingreifendes Arbeitsgerät (nicht dargestellt), wie z. B. ein Streichblechpflug oder ein Meißelpflug, kann auf übliche Weise an den Unterlenkern 28 montiert werden. Alternativ dazu kann ein gezogenes Arbeitsgerät (nicht dargestellt) an dem Zugpendel 36 angekuppelt werden. Ein Zugkraftsensor 38 ist in ein nicht dargestelltes Verbindungsstück zwischengeschaltet, welches anstelle des Zugkraftfühlzylinders ei-ner üblichen hydromechanischen Anhängevorrich-tung eingefügt ist und der Erfassung der Zugkraft, welche von dem einteiligen Arbeitsgerät auf die Unterlenker 28 übertragen wird, dient. Alternativ hierzu können gesonderte linke und rechte Kraftsensoren in den linken und rechten Unterlenker 28 eingefügt sein, deren Signale elektronisch gemischt und gemittelt werden. Im Falle eines geschleppten Anhängegerätes kann die Zugkraft durch einen Kraftsensor, der in dem Zugpendel 36 zwischengeschaltet ist, oder mit einer Anhängevorrichtung, welche an die Hubspindeln gekoppelt ist, ermittelt werden. In beiden Fällen kann jeder geeignete bekannte Zugsensor Anwendung finden, z. B. das Modell GZ-10, welches durch Revere Corporation of America hergestellt wird.

Die hydraulische Verbindung zu und von den Zylindern 34 oder zu und von den nicht dargestellten entfernt liegenden Zylindern an einem gezogenen oder halbintegralen Arbeitsgerät wird durch ein Paar hydraulische Strömungssteuerventile 42a und 42b gesteuert, welche durch Magnetspulen betätigt werden und deren elektrische Steuersignale von einer Steuereinheit erzeugt werden. Bei dem Strömungssteuerventil 42 kann es sich um ein solches handeln, wie es in der EP 0 325 958 A1, auf die hiermit hinsichtlich der Offenbarung Bezug genommen wird, beschrieben wurde. Es kann jedoch auch ein anderes handelsübliches Ventil Verwendung finden.

Ein von der Bedienungsperson betätigbarer Steuerhebel 52 steht mit einem Wandler 54 (beispielsweise ein Potentiometer) in Verbindung, welcher eine Führungsgröße erzeugt. Diese Führungsgröße entspricht in Abhängigkeit der Einstellung eines Potentiometers 56 einer gewünschten Ein-stellage der Anhängevorrichtung, einer gewünsch-ten Zugkraft oder einer Kombination von beiden. Ein oberes elektrisches Grenzsignal wird durch ein von der Bedienungsperson einstellbares Potentiometer 51 erzeugt. Der Steuerhebel 52 bewegt sich in einem Schlitz 57. Die Enden 53 und 55 dieses Schlitzes 57 wirken als unterer bzw. oberer mechanischer Anschlag, welche mechanisch die Lage des Steuerhebels 52 und somit auch das Signal des Potentiometers 54 begrenzen. Es ist ferner ein von der Bedienungsperson einstellbares Potentiometer 58 zur Einstellung des Absenkgeschwindigkeitsmaßes vorgesehen.

Ein Lagewandler 60, beispielsweise ein übliches Drehpotentiometer, erzeugt ein Lagemeßsignal, welches die aktuelle Lage der Hubwelle 24 repräsentiert. Es kann auch ein Lagerückkopplungssignal von dem Hubwellenzylinder 34 oder von dem entfernt liegenden Hubzylinder erhalten werden, sofern der Zylinder einen Lagewandler enthält, wie er beispielsweise in der US-PS 3,726,191 beschrieben ist.

Ferner kann ein zweipoliger Hebe/Senk-Umschalter 70 außerhalb der Schlepperkabine in der Nähe der Anhängevorrichtung befestigt sein, so daß die Bedienungsperson die Anhängevorrichtung von einem Ort außerhalb der Kabine aus anheben und absenken kann. Ein Eichschalter 72, der jedoch nicht Teil der Erfindung ist, befindet sich innerhalb der Kabine.

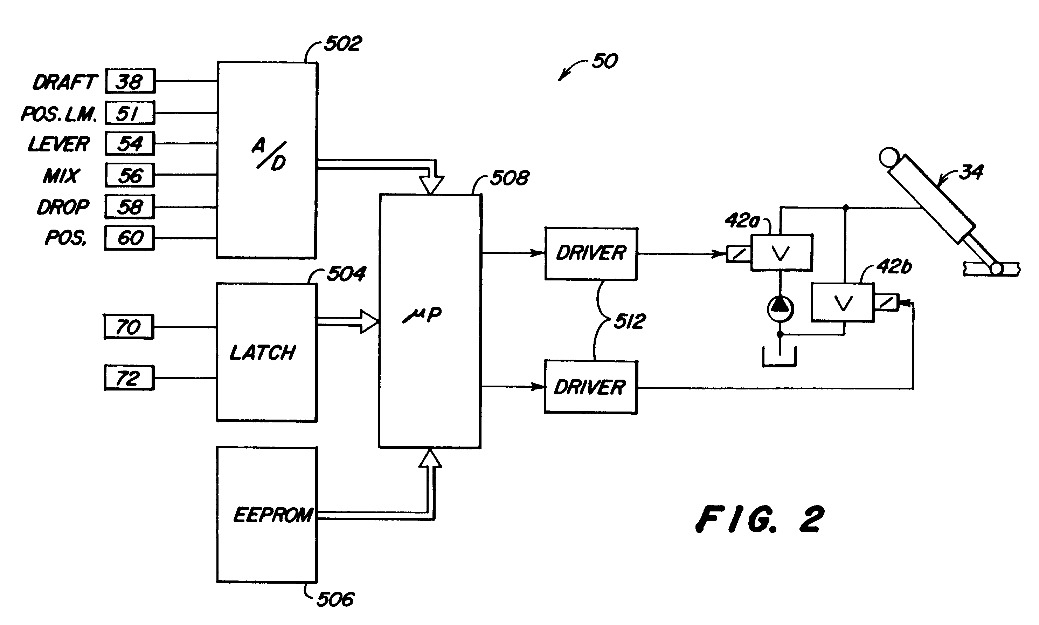

Bezugnehmend auf Fig. 2 enthält die Steuereinheit 50 einen Analog/Digital-Umsetzer 502, ein Latch 504 (Flip-Flop-Register), einen elektrisch löschbaren programmierbaren Festwertspeicher (EEPROM) 506, einen Mikroprozessor 508 mit einem nicht dargestellten Integralzeitgeber und zwei Ventilsteuereinheiten 512. Bei den Ventilsteuereinheiten kann es sich um beliebige übliche pulsweitenmodulierte Ventilstromsteuereinheiten handeln, es werden jedoch solche bevorzugt, wie sie in der gleichzeitig eingereichten europäischen Patentanmeldung gemäß Anmelderaktenzeichen 13559 EP LL/Mi 05 beschrieben sind. Die Analogsignale der Sensoren bzw. Potentiometer 38, 51, 54, 56, 58 und 60 werden im Analog/Digital-Umsetzer in digitale Signale umgewandelt und dann dem Mikroprozessor 508 zugeführt. Das Latch 504 verbindet den Hebe/Absenk-Umschalter 70 und den Eichschalter 72 mit dem Mikroprozessor 508. Das EEPROM 506 speichert Eichdaten, welche in einem Eichverfahren verwendet werden, worauf in der gleichzeitig eingereichten europäischen Patentanmeldung gemäß Anmelderaktenzeichen 13560 EP LL/Mi 05 näher eingegangen wird.

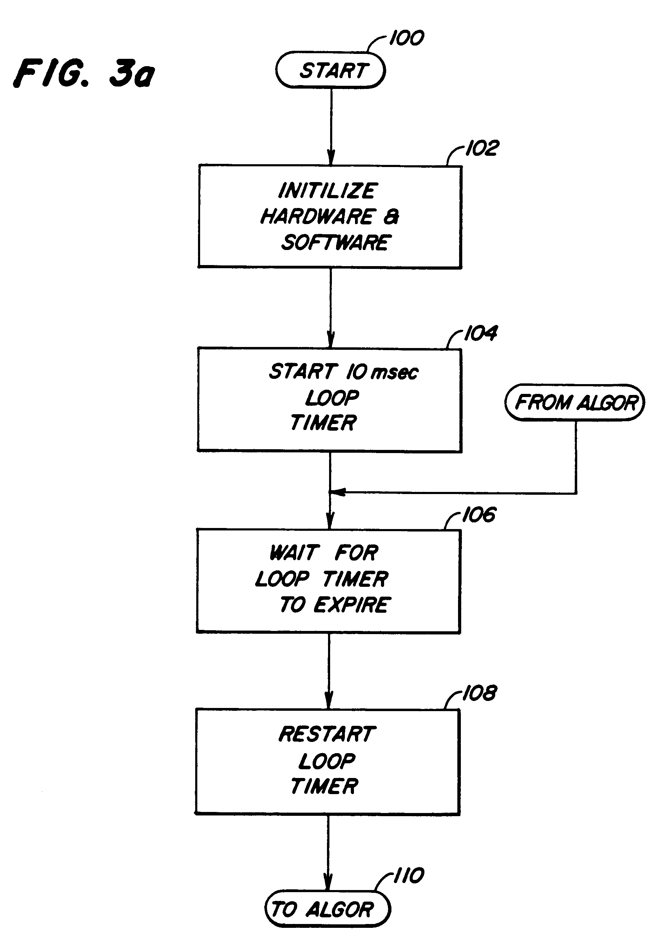

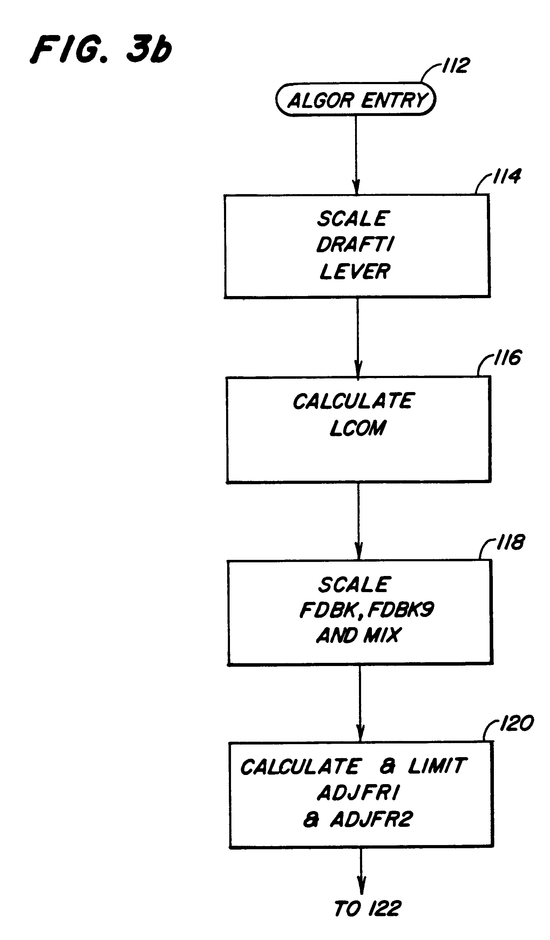

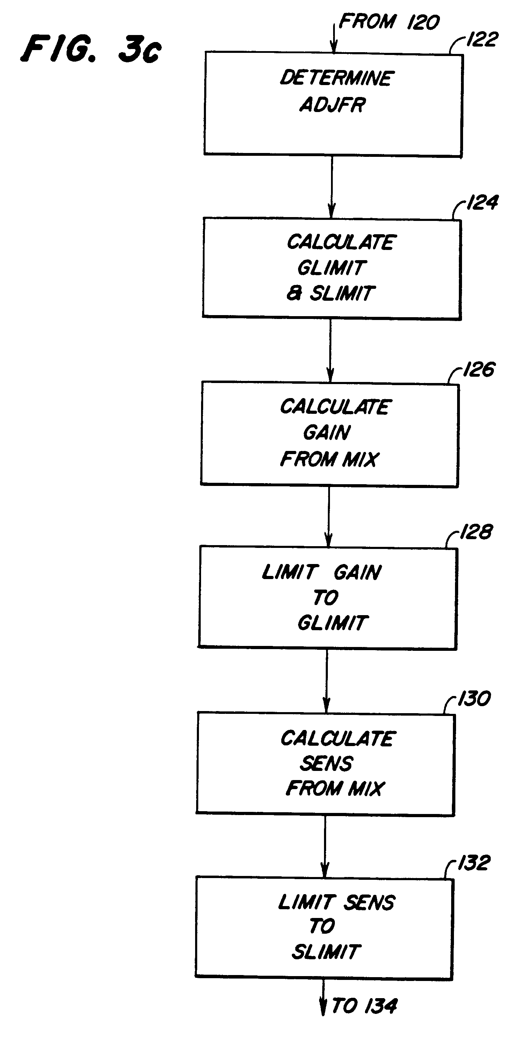

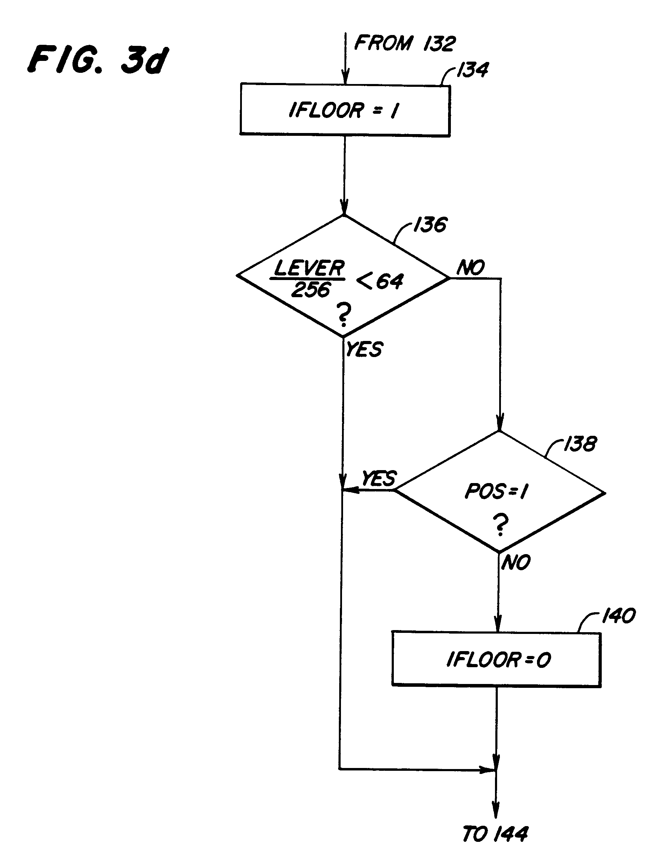

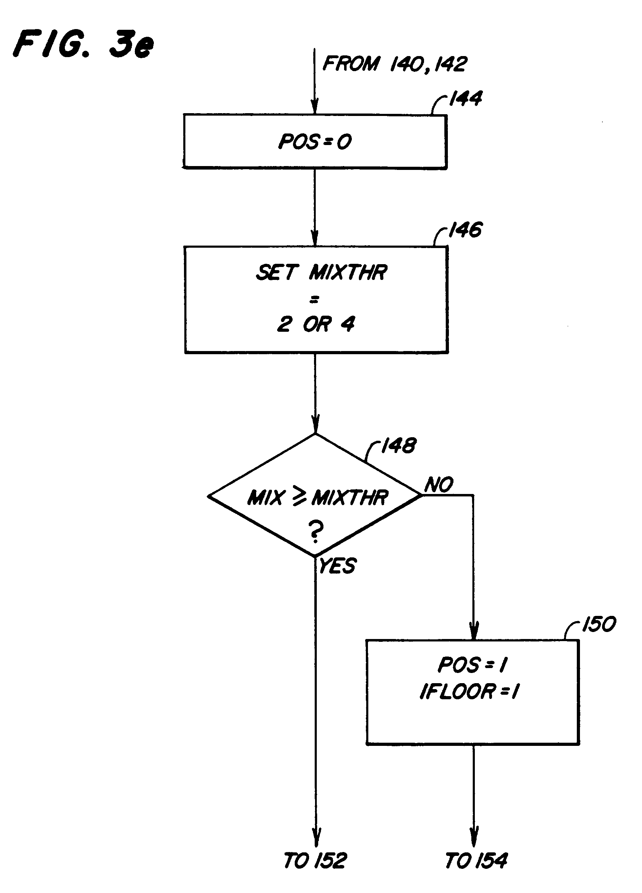

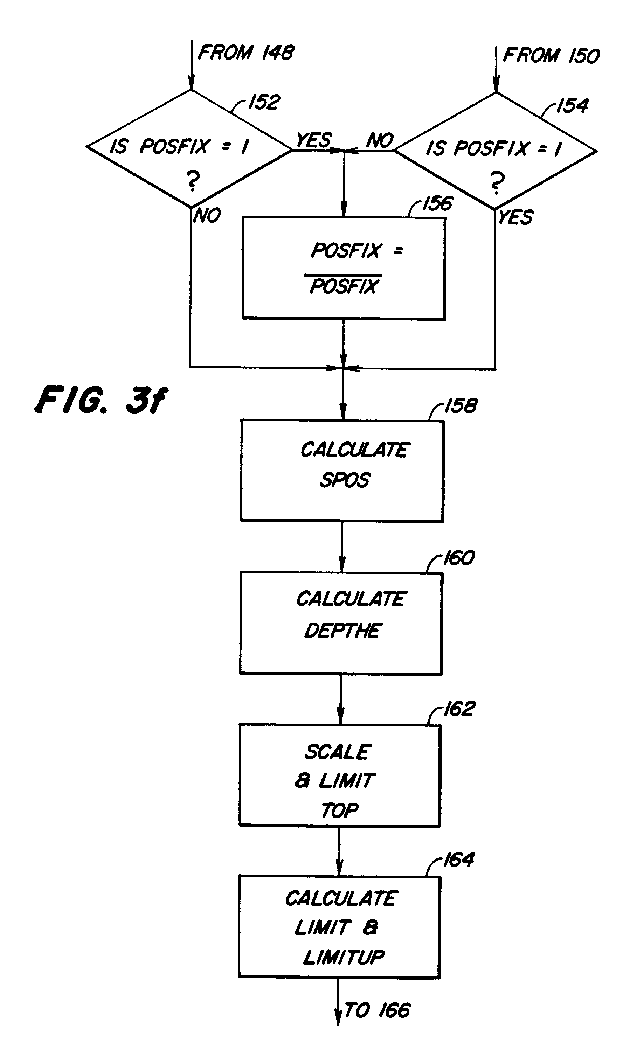

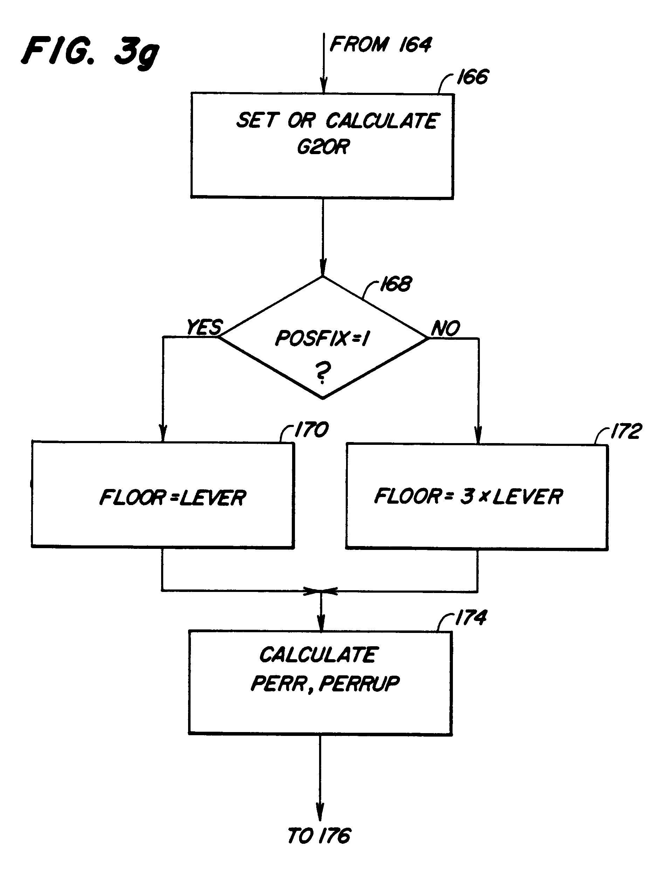

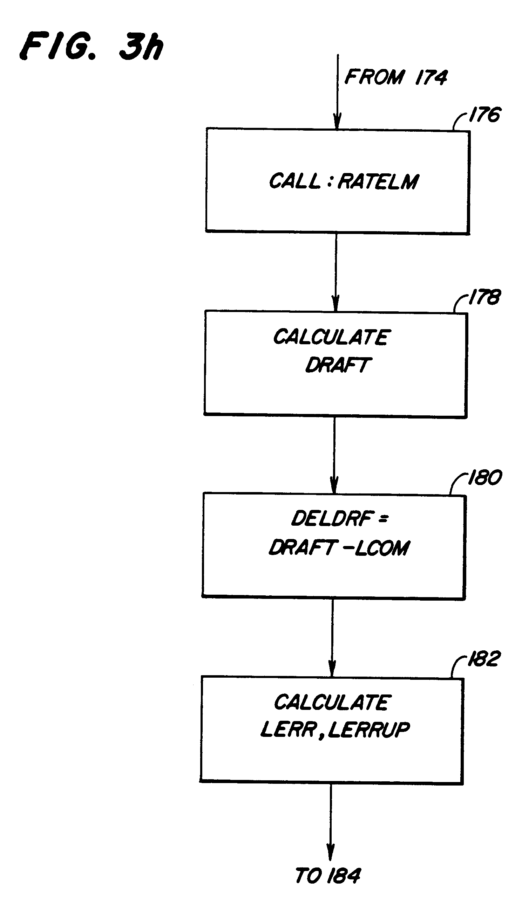

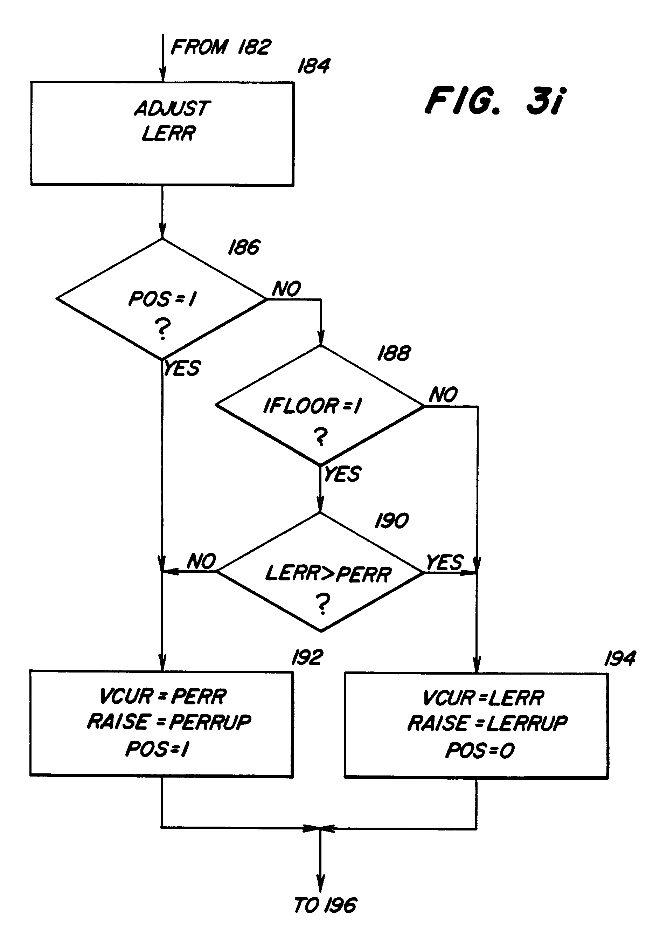

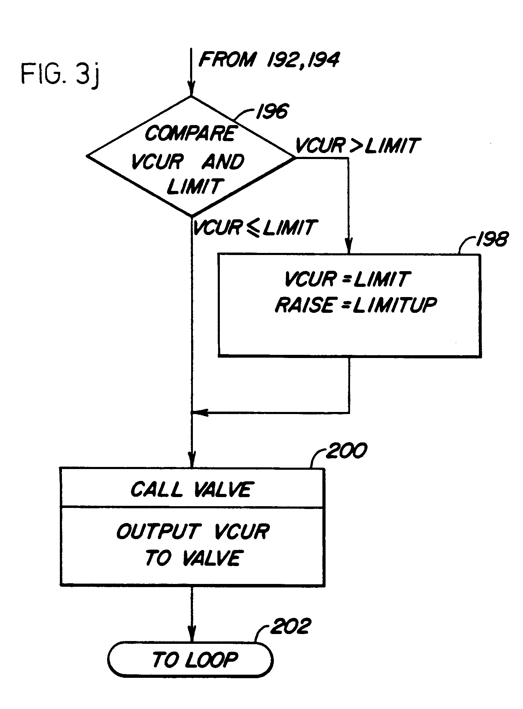

Der Steueralgorithmus, wie er von der Steuereinheit 50 ausgeführt wird, ergibt sich aus den in den Figuren 3a bis 3j dargestellten Flußdiagrammen. In der folgenden Beschreibung gelten folgende Zuordnungen: "G.T." bedeutet "größer als", "L.T." bedeutet "kleiner als", "G.T.E." bedeutet "größer als oder gleich" und "L.T.E." bedeutet "kleiner als oder gleich".

Der Algorithmus beginnt bei Schritt 100, wonach in dem Schritt 102 verschiedene Variablen und Festwerte eingeführt werden. Dann wird in den Schritten 104 bis 110 der ALGOR-Algorithmus alle 10 Millisekunden gestartet. Der ALGOR-Algorithmus beginnt mit dem Schritt 112, dann werden in Schritt 114 die Werte entsprechend der Zugkraft, welche vom Sensor 38 (DRAFT) gemessen wird, und entsprechend des Signals des Potentiometers 54, welches die Lage des Steuerhebels 52 (LEVER) repräsentiert, eingegeben und auf geeignete Weise skaliert. In Schritt 116 wird ein Lastbefehlswert LCOM nach der Gleichung berechnet: LCOM = (LEVER x 1693/65536) + 83. Dann werden in Schritt 118 folgende Werte skaliert: FDBK (16-bit-Wert, repräsentiert die Hubwellenlage entsprechend Potentiometer 60), FDBK9 (9-bit-Wert, repräsentiert die Hubwellenlage) und MIX (Wert, repräsentiert die Einstellung des Mischsteuerpotentiometers 56).

In Schritt 120 werden folgende Gleichungen und Anweisungen angewendet, um den Empfindlichkeitswert und den Verstärkungsgrenzwert (ADJFR1) und (ADJFR2) zu berechnen und zu begrenzen:

$$ADJFR1 = (FDBK/256 - G71F) \times G70f,$$

wenn ADJFR1 L.T. 0, dann AJDFR1 = 0,
wenn ADJFR1 G.T. 255, dann ADJFR1 = 255,

$$ADJFR2 = (LEVER/256 - G71L) \times G70L,$$

wenn ADJFR2 L.T. 0, dann ADJFR2 = 0,
wenn ADJFR2 G.T. 255, dann ADJFR = 255,
wobei G71F, G70f, G71L und G70L vorherbestimmbare Konstanten sind.

Dann wird in Schritt 122 ein Wert ADJFR dem größeren der Werte von ADJFR1 und ADJFR2 gleichgesetzt. Der ADJFR-Wert wird dann in Schritt 124 verwendet, um eine Verstärkungsgrenze (GLIMIT) und eine Empfindlichkeitsgrenze (SLIMIT) aus den folgenden Gleichungen zu ermitteln:

$$GLIMIT = (ADJFR \times G72/256) + G60,$$
$$SLIMIT = ADJFR + 128, \text{ und}$$

wenn SLIMIT G.T. 255, dann SLIMIT = 255,
wobei G60 und G72 vorherbestimmbare Konstanten sind.

In Schritt 126 wird ein Verstärkungswert GAIN als Funktion des Wertes MIX wie folgt bestimmt, wobei MIX dem von der Bedienungsperson eingestellten Wert am Mischsteuerpotentiometer 56 entspricht:

Wenn MIX L.T. G63, dann GAIN = G60,
wenn G63 L.T. MIX L.T. G64, dann GAIN = (MIX-G63) x G61 + G60,
oder
wenn MIX G.T. G64, dann GAIN = (G64-G63) x G61 + G60, wobei G61, G63 und G64 vorherbestimmbare Konstanten sind.

In Schritt 130 wird der Empfindlichkeitswert SENS als Funktion von MIX wie folgt ermittelt:

Wenn MIX L.T. G63, dann SENS = 128 - (G63 - MIX) x G66/256,

wenn G63 L.T. MIX L.T. G64, dann SENS 128,

wenn MIX G.T. G64, dann SENS = (MIX-G64) x 1,5 + 128,

wenn SENS L.T. G62, dann SENS = G62, und

wenn SENS G.T. 255, dann SENS = 255,

wobei G62 und G66 vorherbestimmbare Konstanten sind. Das Ergebnis der Schritte 126 und 130 ist, daß mit einer Verstellung des Mischsteuerpotentiometers 56 von Minimum auf Maximum die Empfindlichkeit zunächst ansteigt, dann die Verstärkung ansteigt und dann wieder die Empfindlichkeit ansteigt.

Schritt 132 begrenzt den SENS-Wert auf den SLIM-Wert, der in Schritt 124 vorgegeben wurde. Dann wird in Schritt 134 ein Flag-Wert (IFLOOR) gleich 1 gesetzt, was der Ausgangsannahme entspricht, daß das Steuersystem eine Betriebsart einnimmt, in der es erwünscht ist, daß eine Minimum- oder Boden-Lage vorliegt, unter die die Anhängevorrichtung nicht abgesenkt wird.

Dann wird in Schritt 128 der GAIN-Wert auf den GLIMIT-Wert begrenzt, mit dem Ergebnis, daß die Schritte 120 bis 132 die Verstärkung und Empfindlichkeit derart begrenzen, daß zufällige Vibrationen der Anhängevorrichtung nicht selbsttätig das Steuersystem beeinflussen, wenn die Anhängevorrichtung sich in angehobener Stellung befindet und sich selbst oder ein aus dem Boden gehobenes Anhängegerät hält.

In Schritt 136 wird dann festgestellt, ob der Steuerhebel 52 sich in dem hinteren Viertel seines Bereiches befindet. Ein LEVER-Wert von Null bedeutet, daß der Steuerhebel 52 ganz hinten steht, und ein LEVER-Wert von 6535 bedeutet, daß der Steuerhebel 52 ganz vorne steht. Befindet sich der Steuerhebel 52 in seinem hinteren Viertel, dann erfolgt eine Fortsetzung mit Schritt 144. Anderenfalls wird der Algorithmus mit Schritt 138 fortgesetzt, in dem der Wert eines Lagemodus-Flags POS geprüft wird. Ist POS = 1, so befindet sich das System in seinem Lagesteuermodus, und Schritt 138 richtet den Algorithmus auf Schritt 144. Wird durch POS = 0 angezeigt, daß sich das System infolge einer früheren Rechenoperation des Schrittes 194 in dem Zugkraftsteuermodus befindet, so wird der Algorithmus mit Schritt 140 fortgesetzt, in dem der Flag-Wert IFLOOR Null gesetzt wird, wodurch angezeigt wird, daß das Merkmal, demzufolge eine Minimum- oder Bodenlage der Anhängevorrichtung erwünscht ist, nicht gefordert wird.

In Schritt 144 wird das POS-Flag Null gesetzt, wodurch die Annahme angezeigt wird, daß sich das System in seinem Zugkraftsteuermodus (Schritt 194) befindet, so lange, bis POS bei der Ausführung eines der Schritte 192 oder 150 auf Eins gesetzt wird.

In Schritt 146 wird ein MIXTHR-Wert auf 2 oder 4 gesetzt, und zwar in Abhängigkeit des POSFIX-Wertes, welcher willkürlich beim Systemanlauf auf 1 oder 0 initialisiert wird und welcher bei Schritt 156 invertiert wird. Wenn gemäß Schritt 148 MIX größer ist als MIXTHR, was bedeutet, daß das Steuersystem sich nicht in einer "festgesetzten Lage" befindet, schreitet der Algorithmus zu Schritt 152 weiter. Ist hingegen MIX nicht größer als MIXTHR, was bedeutet, daß das System sich in einem Steuermodus bei "festgesetzter Lage" befindet, schreitet der Algorithmus zu Schritt 150 weiter, wo das POS-Flag und das IFLOOR-Flag jeweils auf 1 gesetzt werden. Danach geht es weiter mit Schritt 154.

Sowohl in Schritt 152 als auch in Schritt 154 wird überprüft, ob das POSFIX-Flag richtig die Einstellung des Mischsteuerpotentiometers 56 wiedergibt. Schritt 152 richtet den Algorithmus auf Schritt 156, wenn das POSFIX-Flag gesetzt wurde, anderenfalls geht es mit Schritt 158 weiter. Schritt 156 invertiert den POSFIX-Wert. Auf diese Weise wirken die Schritte 146 bis 156 mit einer Hysteresis, wobei das Kontrollsystem ein zufälliges von dem Mischsteuerpotentiometer 52 herrührendes Rauschen geringer Intensität unterdrückt.

In Schritt 158 wird ein Lagesollwert SPOS wie folgt festgesetzt:

$$SPOS = (LEVER \times 178/65536) + 243.$$

Damit hängt der SPOS-Wert von der Lage des Steuerhebels 52 ab und läßt Werte zu, welche nur der unteren Hälfte des Lagebereiches, den die Anhängevorrichtung einnehmen kann, entsprechen. Dies ist wünschenswert, da im Zugkraftsteuermodus gewöhnlich nur Steuerhebellagen in der unteren Hälfte des Lagebereiches verwendet werden. Die oberen Steuerhebellagen werden hingegen vor allem beim Transport- oder Lagesteuermodus eingestellt. Daher ist es wünschenswert, wenn im Zugkraftsteuermodus der Lageeinstellwert entsprechend begrenzt wird.

In Schritt 160 wird ein Tiefenfehlerwert DEPTHE durch folgende Gleichung bestimmt:

$$DEPTHE = FDBK9 - SPOS.$$

Dieser DEPTHE ist ein Tiefenfehlerwert des Anhängegerätes und wird später in Schritt 182 benutzt, um einen Lastfehlerwert LERR zu bestimmen.

Als nächstes wird in Schritt 162 ein Lagewert TOP für die obere Anhängevorrichtungsposition anhand der nachfolgenden Beziehungen durch Skalieren und Begrenzen des TOPLIM-Wertes gewonnen, wobei der TOPLIM-Wert von dem durch die Bedienungsperson einstellbaren Potentiometer 51 für den oberen Grenzwert erhalten wird.

TOP = 146 - 146 x TOPLIM/256, und

wenn TOP L.T. 15, dann TOP = 15.

In Schritt 164 wird ein Ventilbefehlsgrenzwert LIMIT aus folgenden Beziehungen bestimmt:

wenn FDBK G.T.TOP x 256, dann G20 = G20PS, sonst

wenn G20R = 0, dann G20 = G20PS x 2, sonst

G20 = G20R, wobei G20PS ein gegenwärtiger Grenzwert für das Druckventil ist und G20R ein gegenwärtiger Grenzwert für das Rückflußventil ist.

Wenn ABS(FDBK - (TOP x 256)) G.T. 16384, dann LIMIT = G20, und

wenn ABS(FDBK - (TOP x 256)) L.T.E. 16384, dann LIMIT = G20 - G20 x (1 - (ABS(FDBK - (TOP x 256))/16384))$^2$, wobei ABS die unverschlüsselte Ventilfunktion und G20 eine vorherbestimmbare Konstante ist.

Ferner wird in Schritt 164 ein Flag-Wert LIMTUP gesetzt, der angibt, ob der LIMIT-Wert an das Rückflußventil oder das Druckventil angelegt wird. LIMTUP wird nach folgender Beziehung bestimmt:

Wenn FDBK L.T. TOP, dann LIMTUP = 0, sonst LIMTUP = 1, wobei LIMTUP = 0 anzeigt, daß der Befehlsgrenzwert ein minimales Rückflußventilkommando, und LIMTUP = 1 anzeigt, daß der Befehlsgrenzwert ein maximales Druckventilkommando ist.

Dieser Ventilbefehlsgrenzwert LIMIT repräsentiert die maximale Größe oder Stärke eines Befehles, durch welchen das Druckventil 42a angesteuert werden kann, oder die minimale Größe oder Stärke eines Befehles, durch welchen das Rückflußventil 42b angesteuert werden kann, um entweder zu öffnen oder zu schließen. Es soll betont werden, daß dann, wenn die Anhängevorrichtung dem von der Bedienungsperson anhand des Potentiometers 51 für den oberen Grenzwert vorgegebenen oberen Lagegrenzwert TOP nahe kommt, der LIMIT-Wert als nicht lineare Funktion des absoluten Wertes der Differenz zwischen FDBK (erfaßte Lage der Anhängevorrichtung) und TOP festgesetzt wird. Genauer gesagt hängt der LIMIT-Wert von dem Quadrat der Menge

(1 - (ABS(FDBK - (TOP x 256))/16384))

ab.

Diese nicht lineare Beziehung ruft eine allmähliche weiche Bewegung der Anhängevorrichtung zu ihrer oberen Lage hervor, wenn die Bedienungsperson den Steuerhebel 52 zurückzieht, auch dann, wenn die Anhängevorrichtung und das Anhängegerät über den Boden angehoben sind.

In Schritt 166 wird ein Stromgrenzwert G20R für das Rückflußventil aus einem Senkgeschwindigkeitswert DRATE (welcher aus der Einstellung des von der Bedienungsperson einstellbaren Senkgeschwindigkeitspotentiometers 58 ableitbar ist) entsprechend der nachfolgenden Beziehung abgeleitet:

wenn DRATE G.T. 255, dann G20R 0 =, sonst G20R = 2 x G20PS x (DRATE/256) + G20RM, wobei G20PS und G20RM vorherbestimmbare Konstanten sind, die gewählt werden, um den maximalen Ventilstrom entsprechend den Anforderungen des speziellen elektrohydraulischen Ventils einzustellen.

Dies ermöglicht es der Bedienungsperson, den maximalen Grad, auf den das Rückflußventil 42b geöffnet werden kann, und damit auch den maximalen Grad, mit dem die Anhängevorrichtung 26 abgesenkt wird, einzustellen. Demgemäß ist der Rückflußventilgrenzwert G20R im wesentlichen (in einem Ausmaß, wie es eine 8-bit Steuerung erlaubt) stufenlos in einem bestimmten Bereich von der Bedienungsperson einstellbar.

Schritt 168 ermittelt, ob das POSFIX-Flag gleich 1 ist, wodurch angezeigt wird, daß ein Betriebszustand für eine "festgesetzte Lage" wirksam ist. Durch die Schritte 152 bis 156 wird der passende Wert von POSFIX bestimmt, mit dem Ergebnis, daß POSFIX nur dann gleich 1 wird, wenn das Mischsteuerpotentiometer 56 auf sein Minimum (reine Lage) gesetzt ist. Ist POSFIX = 1, so schreitet der Algorithmus zu Schritt 170 weiter, wo ein Bezugswert FLOOR mit dem LEVER-Wert gleichgesetzt wird. Anderenfalls schreitet der Algorithmus mit Schritt 172 weiter, bei dem der Bezugswert FLOOR einem Vielfachen (dreifach) des LEVER-Wertes gleichgesetzt wird.

Als nächstes wird in Schritt 174 ein Ventilbefehl PERR für die Lagesteuerbetriebsart als eine nicht lineare Funktion der Anzahl (FDBK - FLOOR) wie folgt bestimmt:

wenn FDBK G.T.E. FLOOR, dann G20 = G20PS, sonst

wenn G20R = 0, dann G20 = G20PS x 2, sonst G20 = G20R.

Wenn ABS(FDBK - FLOOR) G.T. 16384, dann

PERR = G20 - G20 x (1 - ABS(FDBK - FLOOR)/16384)$^2$,

und
wenn FDBK L.T. FLOOR, dann
PERRUP = 0, R5 = FDBK - FLOOR, sonst
PERRUP = 1 und R5 = 0, wobei PERRUP ein Flag ist
(0 zeigt an, daß ein Signal an das Rückflußventil 42b angelegt wird, 1 zeigt an, daß ein Signal an das Druckventil 42a angelegt wird), und R5 ein Wert ist, der an anderer Stelle des Algorithmus verwendet wird. Der Schritt 174 enthält eine nicht lineare Lagefehlerfunktion, welche ähnlich wie die Funktion in Schritt 164 so wirkt, daß die Anhängevorrichtung sich glatt und stufenlos entsprechend der Wandlerlage (repräsentiert durch FLOOR), die von der Bedienungsperson durch Verstellen des Steuerhebels 52 nach vorn eingestellt wird, bewegt, selbst dann, wenn die Anhängevorrichtung und das Anhängegerät von dem Boden abgehoben sind. Die Schritte 168 und 172 sind wirksam, wenn das System auf erfaßte Zugkraft (entsprechend der Einstellage des Mischsteuerpotentiometers) anspricht, um zu verhindern, daß der FLOOR-Wert die Zugkraft beeinflußt, die eine Absenkung der Anhängevorrichtung herbeiführt. Demgemäß arbeiten die Schritte 164 und 174 so, daß die Lage der Anhängevorrichtung durch eine nicht lineare Funktion begrenzt ist, wobei die Funktion von der gemessenen Lage (FDBK), die zwischen einem erwünschten oberen Grenzwert und einem erwünschten unteren Grenzwert liegt und der Lage der Anhängevorrichtung entspricht, und durch die Bedienungsperson vermittels des Steuerhebels 52 eingestellt ist.

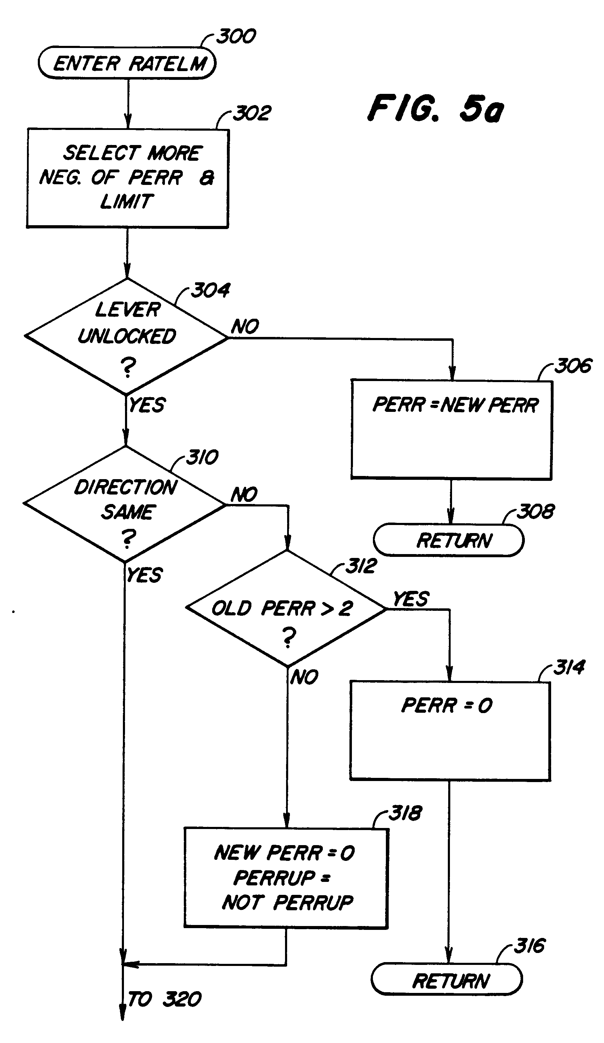

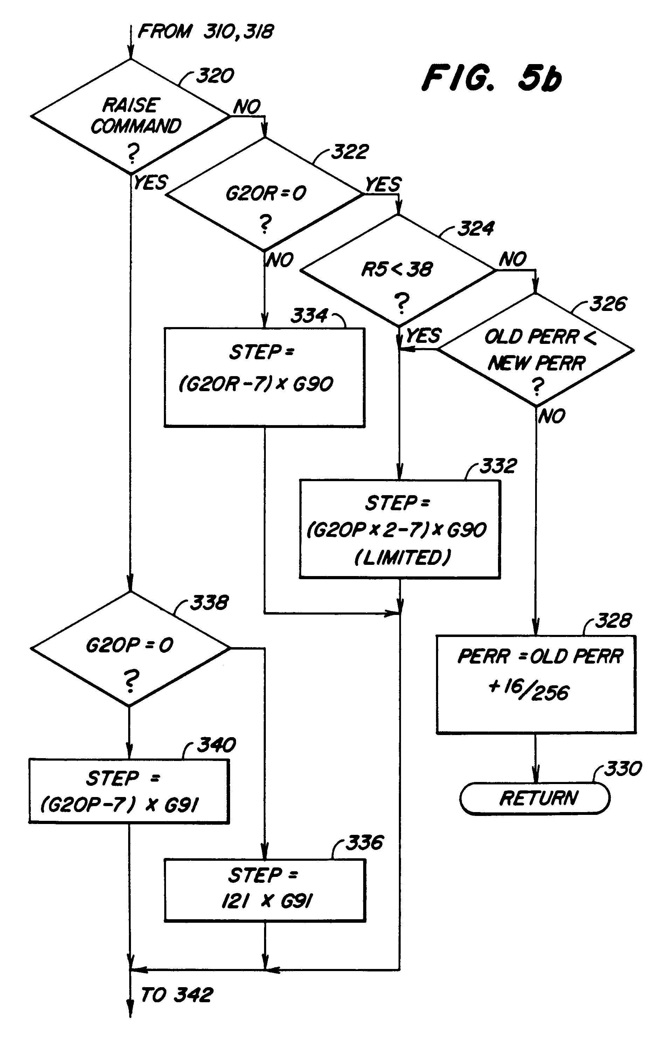

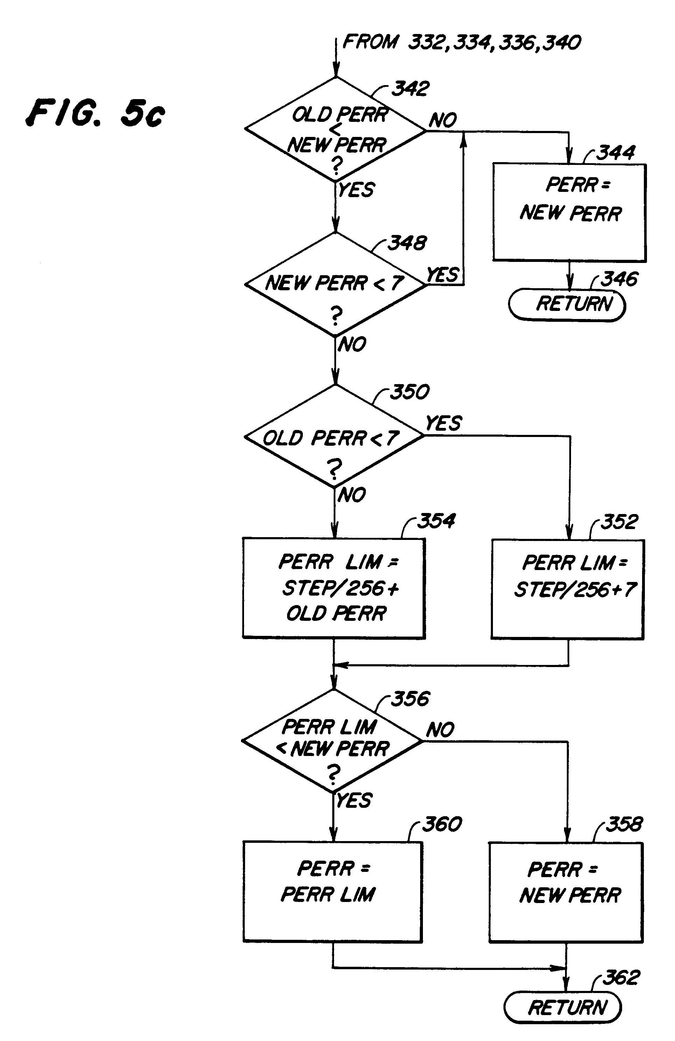

Schritt 176 ruft ein Unterprogramm RATELM auf, welches den R5-Wert, der in Schritt 174 bestimmt ist, verwertet und durch welches die Größe begrenzt wird, mit der die Ventile in Abhängigkeit von steigenden Lagefehlerwerten geöffnet werden. Wie die Figuren 5a bis 5c zeigen, wird das RATELM-Unterprogramm durch die Schritte 300 bis 362 ausgeführt. Es setzt den Lagefehlerwert PERR gleich mit dem Negativeren der Werte PERR oder LIMIT.

In Schritt 178 wird ein intern erfaßter Zugkraftwert DRAFT als Funktion des Signals des Zugkraftsensors 38 oder bei Verwendung mehrerer Sensoren als Funktion des Mittelwertes der Sensorsignale berechnet.

In Schritt 180 wird ein Zugkraftfehlerwert DELDRF gleichgesetzt der Differenz zwischen DRAFT und dem Lastbefehlswert LCOM.

Dann wird in Schritt 182 ein "vereinigter" oder Lastfehlerwert LDERR von dem Zugkraftfehlerwert (DELDRF), dem Empfindlichkeitswert (SENS), dem Tiefenfehlerwert (DEPTHE) und dem Verstärkungswert (GAIN) wie folgt abgeleitet:

$$LDERR = (DELDRF \times SENS/256 + DEPTHE) \times GAIN,$$

wenn LDERR L.T. 0, dann ist LERRUP = 0, anderenfalls ist LERRUP = 1 und LERR = ABS-(LDERR) (begrenzt auf 32767), wobei LERRUP ein Flag-Wert ist (0 bedeutet, daß ein Signal an das Rückflußventil 42b angelegt wird, und 1 bedeutet, daß ein Signal an das Druckventil 42a angelegt wird). Hat die Bedienungsperson somit durch Einstellung des Potentiometers 56 einen Mischwert eingestellt, wodurch das System auf Änderungen der erfaßten Zugkraft anspricht, so wird durch die Schritte 178 bis 182 ein Zugkraft- oder Lastfehlerwert LERR aus einer Mischfunktion abgeleitet, die primär aus einer <u>linearen</u> Funktion der erfaßten Zugkraft und sekundär aus einer linearen Funktion des begrenzten Lagefehlerwertes DEPTHE gebildet wird. Diese lineare Funktion erlaubt es dem Steuersystem, sehr schnell auf Änderungen der Zugkraft anzusprechen, wohingegen die nicht lineare Funktion der Schritte 164 bis 174 eine stoßfreie Steuerung der Anhängevorrichtung erlaubt, wenn die Anhängevorrichtung als Funktion ihrer erfaßten Lage gesteuert wird.

Da der SPOS-Wert nur äquivalent zur Lage der Anhängevorrichtung 26 in deren unteren Bereichshälfte sein kann, zielt der DEPTHE-Wert in Schritt 182 darauf ab, das Steuersystem zu veranlassen, die Anhängevorrichtung in dem unteren Bereich ihrer Lage und somit das Anhängegerät im Boden zu halten. Dies hat auch die Wirkung, daß dann, wenn das System in seinem Zugkraftsteuermodus in einem stationären Gleichgewichtszustand arbeitet, Änderungen in der Einstellung des Mischsteuerpotentiometers 56 nur minimale Änderungen in der Arbeitstiefe des Anhängegerätes zur Folge haben. Es soll auch hervorgehoben werden, daß der Empfindlichkeitswert SENS den relativen Einfluß zwischen dem Zugkraftfehler und dem Tiefenfehler auf die Ableitung des Lastfehlers LERR festsetzt. Als Ergebnis aus Schritt 130 ist die Größe dieses relativen Einflusses auf den Bereich von ungefähr 0,5 bis 2,0 begrenzt.

In Schritt 184 wird LERR, falls er nicht Null ist, auf unterschiedliche Werte wie folgt eingestellt, und zwar abhängig davon, ob das für die Ventilverstellung erforderliche Steuersignal an das Rückflußventil 42b oder an das Druckventil 42a angelegt ist:

wenn LERRUP = 1, dann LERR = 16 x LERR x G18LP/65536 + G19ADD und

wenn LERRUP = 0, dann LERR = 16 x LERR x G18R/65536 + G19ADD, wobei G18LP, G18LR und G19ADD vorherbestimmbare Konstanten sind. Auf diese Art wird ein unterschiedlich großer LERR-Wert für das Rückflußventil 42b und das Druckventil 42a verwendet. Dies ermöglicht eine Auslegung des Algorithmus auf unterschiedliche Durchflußcharakteristiken für das Druckventil und das Rückflußventil.

In Schritt 186 wird dann anhand des POS-Flag geprüft, ob eine reine Lageregelung vorliegt. Wenn ja, schreitet der Algorithmus weiter zu Schritt 192, wo das Ventilkommando oder der Ventilstrom VCUR gleichgesetzt wird mit dem Lagefehlerwert PERR. Ferner wird in Schritt 192 ein RAISE-Flag gleichgesetzt mit PERRUP und das POS-Flag gleich 1 gesetzt. Liegt keine reine Lageregelung vor, so schreitet der Algorithmus zu Schritt 188 weiter.

In Schritt 188 wird bestimmt, ob das IFLOOR-Flag auf 1 gesetzt wurde, wodurch angezeigt wird, daß ein Bezugswert für die Bodenlage erforderlich ist. Ist das IFLOOR-Flag nicht 1, schreitet der Algorithmus weiter zu Schritt 194, in welchem der VCUR-Wert gleichgesetzt wird mit dem gemischten oder Lastfehlerwert PERR und in welchem das RAISE-Flag gleichgesetzt wird mit LERRUP und das POS-Flag auf Null gesetzt wird. Ist das IFLOOR-Flag nicht 1, so schreitet der Algorithmus weiter mit Schritt 190.

Der Schritt 190 richtet den Algorithmus auf Schritt 192, sofern LERR größer ist als PERR, anderenfalls auf Schritt 192. Von den Schritten 192 und 194 schreitet der Algorithmus weiter zu den Schritten 196 und 198, durch welche der VCUR-Wert auf den Grenzwert LIMIT begrenzt wird, und dann zu Schritt 200, welcher den VCUR-Wert an die zugehörige Ventilansteuereinheit 512 ausgibt, um den Zylinder 34 aus- oder einzufahren. Schließlich bewirkt Schritt 202 eine Ruckführung zu der Zeitschleife, die in Fig. 3a dargestellt ist.

**Patentansprüche**

1. Steuersystem für eine Anhängevorrichtung (26) eines Fahrzeuges (10), an das ein Bodenbearbeitungsgerät befestigbar ist, wobei das Steuersystem ausgestattet ist:

    mit Betätigungsmitteln (34) zum Anheben und Absenken der Anhängevorrichtung (26) über einen Lagebereich in Abhängigkeit von an einen Eingang angelegten Steuersignalen,

    mit Mitteln zur Bestimmung des Zugkraftfehlerwertes DELDRF aus der Differenz zwischen dem erfaßten Zugkraftwert und einem von einer Bedienungsperson einstellbaren Zugkraftsollwert,

    mit Mitteln zur Bestimmung eines Lagefehlerwertes DEPTHE aus der Differenz zwischen einem erfaßten Lagewert und einem Lagesollwert der Anhängevorrichtung (26),

    mit Mitteln zur Herleitung des Steuersignals LDERR aus dem Zugkraftfehlerwert DELDRF , dem Lagefehlerwert DEPTHE und einem Empfindlichkeitswert S sowie einem Verstärkungswert G gemäß folgender Beziehung:

$$LDERR = G \times ((DELDRF \times S) + DEPTHE),$$

dadurch gekennzeichnet, daß G und S von einer Bedienungsperson den Anforderungen entsprechend einstellbare Werte sind, daß Mittel (120, 122, 124, 128) zur Begrenzung von S und G gemäß einer Funktion des erfaßten Lagewertes der Anhängevorrichtung (26) sowie Mittel (130) zur Begrenzung der Größe von S auf Werte zwischen ungefähr 0,5 und 2,0 vorgesehen sind.

2. Steuersystem nach Anspruch 1, dadurch gekennzeichnet, daß eine von der Bedienungsperson einstellbare Vorrichtung (56) zur Erzeugung eines Mischsignales vorgesehen ist und daß ferner Mittel zur Erzeugung eines Verstärkungswertes als Funktion des Mischsignales und Mittel zur Erzeugung eines Empfindlichkeitswertes als Funktion des Mischsignales vorgesehen sind.

3. Steuersystem nach Anspruch 2, dadurch gekennzeichnet, daß die Mittel zur Erzeugung des Verstärkungswertes und des Empfindlichkeitswertes derart wirken, daß bei einer Verstellung des Mischwertes im Sinne einer Vergrößerung des Empfindlichkeitswertes die Mittel zur Erzeugung des Verstärkungswertes den Verstärkungswert vergrößern.

4. Steuersystem nach einem der Ansprüche 1 bis 3, welches enthält:

    einen Sensor (60) zur Erzeugung eines Rückkopplungssignales FDBK , welches einer erfaßten Lage der Anhängevorrichtung (26) entspricht,

    Mittel zur Erzeugung eines Bezugssignals R , welches einer Bezugslage der Anhängevorrichtung (26) entspricht,

    Mittel zur Erzeugung eines Fehlersignales, welches einer nicht linearen Funktion einer Differenz zwischen dem Rückkopplungssignal und dem Bezugssignal entspricht, und

    Mittel zur Umwandlung des Fehlersignals in ein Steuersignal.

5. Steuersystem nach Anspruch 4, dadurch gekennzeichnet, daß das Fehlersignal bestimmt wird durch die Gleichung:

$$E = G20 - G20 (1 - ABS(FDBK - (R \times a)) \times b)^2,$$

wobei a, b und G20 vorherbestimmbare Konstanten sind.

6. Steuersystem nach Anspruch 4 oder 5, dadurch gekennzeichnet, daß Mittel vorgesehen sind, durch die das Fehlersignal einem Grenzsignal gleichgesetzt wird, sofern das Grenzsignal kleiner ist als das Fehlersignal.

7. Steuersystem nach Anspruch 6, dadurch gekennzeichnet, daß durch eine Bedienungsperson einstellbare Mittel (51) zur Erzeugung eines Lagegrenzwertsignals, das einer gewünschten oberen Lage der Anhängevorrichtung (26) entspricht, vorgesehen sind und daß Mittel zur Erzeugung des Grenzsignals als nicht lineare Funktion der Differenz aus dem Rückkopplungssignal und dem Lagegrenzwertsignal vorgesehen sind.

8. Steuersystem nach einem der Ansprüche 1 bis 7, welches enthält:

einen Lagesensor (60) zur Erzeugung eines Lagesignals, welches einer erfaßten Lage der Anhängevorrichtung (26) entspricht,

einen Zugkraftsensor (38) zur Erzeugung eines Zugkraftsignals, das der erfaßten Zugkraft, welche aus der Wechselwirkung der Anhängevorrichtung (26) mit dem Boden herrührt, entspricht,

ein erstes Mittel zur Erzeugung eines Steuersignales als eine nicht lineare Funktion des Lagesignales und

ein zweites Mittel zur Erzeugung eines Steuersignales als eine lineare Funktion des Zugkraftsignales.

9. Steuersystem nach Anspruch 8, gekennzeichnet durch

eine von einer Bedienungsperson verstellbare Führungsvorrichtung (52) zur Einstellung eines gewünschten Wertes eines Führungssignales,

eine von der Bedienungsperson einstellbare Vorrichtung (56) zur Erzeugung eines Mischsignales, welches dem gewünschten Grad der Einflußnahme des Lagesignals und des Zugkraftsignals auf das Steuersystem entspricht,

Mittel zur Erzeugung eines Steuersignals als Funktion des Zugkraftsignals und des Mischwertes,

Mittel zur Herleitung eines Referenzsignales aus dem Führungssignal entsprechend einer ersten Beziehung, sofern die Vorrichtung zur Erzeugung eines Mischsignales sich in einem ersten Zustand befindet, und zur Herleitung des Referenzsignales aus dem Führungssignal entsprechend einer zweiten Beziehung, sofern die Vorrichtung zur Erzeugung eines Mischsignals sich in einem zweiten Zustand befindet, und

Mittel zur Erzeugung von Steuersignalen als Funktion des erfaßten Lagesignales und einem Referenzsignal.

10. Steuersystem nach Anspruch 9, dadurch gekennzeichnet, daß im Falle, daß der Mischwert einer maximalen Einflußnahme des Lagesignales entspricht, das Referenzsignal einem Wert gleichgesetzt wird, der der Lage der Führungsvorrichtung (52) entspricht, und daß im Falle, daß der Mischwert nicht einer maximalen Einflußnahme des Lagesignals entspricht, das Referenzsignal einem Wert gleichgesetzt wird, der der Lage der Führungsvorrichtung (52) multipliziert mit einem Multiplikationsfaktor entspricht.

11. Steuersystem nach Anspruch 10, dadurch gekennzeichnet, daß der Multiplikationsfaktor größer als 1 ist.

12. Steuersystem nach einem der Ansprüche 8 bis 11, gekennzeichnet durch

eine von einer Bedienungsperson verstellbare Führungsvorrichtung (52) zur Einstellung eines gewünschten Wertes eines Führungssignales,

erste Mittel zur Erzeugung der Steuersignale hauptsächlich als Funktion des Lagesignals und des Führungswertes,

zweite Mittel zur Erzeugung des Steuersignals hauptsächlich als Funktion des Zugkraftsignales und des Führungswertes und

Mittel, durch die die ersten Mittel in Betrieb gesetzt werden, wenn die Führungsvorrichtung (52) sich in einem ersten Lagebereich befindet, und durch die die zweiten Mittel in Betrieb gesetzt werden, wenn die Führungsvorrichtung (52) sich in einem zweiten Lagebereich befindet.

13. Steuersystem nach einem der Ansprüche 8 bis 12, gekennzeichnet durch

eine durch eine Bedienungsperson einstellbare Führungsvorrichtung (52),

eine von der Bedienungsperson einstellbare Vorrichtung (56) zur Erzeugung eines Mischsignales,

Mittel zur Erzeugung eines Referenzlagewertes, dessen Größe es erlaubt, einen vorherbestimmbaren Einstellbereich der Führungsvorrichtung (52) darzustellen,

Mittel zur Erzeugung eines Referenzzugkraftwertes, der der Einstellage der Führungsvorrichtung (52) entspricht,

Mittel zur Erzeugung eines Zugkraftfehlerwertes, der der Differenz zwischen dem erfaßten und dem Referenzzugkraftwert entspricht,

Mittel zur Erzeugung eines Lagefehlerwertes, der der Differenz zwischen dem erfaßten und dem Referenzlagewert entspricht,

Mittel zur Erzeugung eines Empfindlichkeitswertes und eines Verstärkungswertes als Funktion der Einstellung der Vorrichtung zur Erzeugung eines Mischsignales und

Mittel zur Erzeugung eines Steuersignales als Funktion des Zugkraftfehlerwertes, des Lagefehlerwertes, des Empfindlichkeitswertes und des Verstärkungswertes.

14. Steuersystem nach Anspruch 13, dadurch gekennzeichnet, daß die Größe des Referenzlagewertes SPOS lediglich von der Einstellage der Führungsvorrichtung (52) abhängt, sofern sich die Anhängevorrichtung in einer unteren Lage ihres Lagebereiches befindet.

## Claims

1. A control system for a hitch device (26) of a vehicle (10), to which a ground-working implement can be attached, wherein the control system is equipped with:

   actuating means (34) for raising and lowering the hitch device (26) over a range of positions, in dependence on control signals applied to an input,

   means for determining the draft error value DELDRF from the difference between the detected draft load value and a set-point draft load value adjustable by an operator,

   means for determining a position error value DEPTHE from the difference between a detected position value and a set-point position value of the hitch device (26),

   means for deriving the control signal LDERR from the draft error value DELDRF, the position error value DEPTHE and a sensitivity factor S, as well as a gain factor G in accordance with the following equation:

   LDERR = G x ((DELDRF x S) + DEPTHE),

   characterized in that G and S are values adjustable by an operator in accordance with requirements, and in that means (120, 122, 124, 128) are provided to limit S and G in accordance with a function of the detected position value of the hitch device (26) as well as means (130) for limiting the magnitude of S to values between approximately 0.5 and 2.0.

2. A control system according to claim 1, characterized in that a device (56) adjustable by the operator is provided for generating a mix signal and in that there are further provided means for generating a gain factor as a function of the mix signal and means for generating a sensitivity factor as a function of the mix signal.

3. A control system according to claim 2, characterized in that the means for generating the gain factor and the sensitivity factor so operate that, on an adjustment of the mix value in the sense to increase the sensitivity factor, the means for generating the gain factor increase the gain factor.

4. A control system according to any of claims 1 to 3, which includes:

   a sensor (60) for generating a feedback signal FDBK which corresponds to a detected position of the hitch device (26),

   means for generating a reference signal R which corresponds to a reference position of the hitch device (26),

   means for generating an error signal which is a non-linear function of a difference between the feedback signal and the reference signal, and

   means for converting the error signal into a control signal.

5. A control system according to claim 4, characterized in that the error signal is determined by the equation:

   $E = G20 - G20(1 - ABS(FDBK - (R \times a)) \times b)^2,$

   wherein a, b and G20 are predeterminable constants.

6. A control system according to claim 4 or 5, characterized in that means are provided for setting the error signal equal to a limit signal insofar as the limit signal is smaller than the error signal.

7. A control system according to claim 6, characterized in that means (51) adjustable by an operator are provided for generating a position limit value signal corresponding to a desired upper position of the hitch device (26), and in that means are provided for generating the limit signal as a non-linear function of the difference between the feedback signal and the position limit value signal.

8. A control system according to any of claims 1 to 7, which includes:

   a position sensor (60) for generating a position signal which corresponds to a detected position of the hitch device (26),

   a draft load sensor (38) for generating a draft load signal which corresponds to the detected draft load which results from the interaction between the hitch device (26) and the ground,

   a first means for generating a control signal as a non-linear function of the position signal and

a second means for generating a control signal as a linear function of the draft load signal.

9.   A control system according to claim 8, characterized by

a guide device (52) adjustable by an operator for setting a desired value of a guide signal,

a device (56) adjustable by the operator for generating a mix signal, which corresponds to the desired degree of influence of the position signal and of the draft load signal on the control system,

means for generating a control signal as a function of the draft load signal and of the mix value,

means for deriving a reference signal from the guide signal in correspondence with a first relationship, insofar as the device for generating a mix signal is in a first state, and for deriving the reference signal from the guide signal in correspondence with a second relationship insofar as the device for generating a mix signal is in a second state, and

means for generating control signals as a function of the detected position signal and a reference signal.

10.  A control system according to claim 9, characterized in that, when the mix value corresponds to a maximum influence of the position signal, the reference signal is set to a value which corresponds to the position of the guide device (52) and in that when the mix value does not correspond to a maximum influence of the position signal, the reference signal is set to a value with corresponds to the position of the guide device (52) multiplied by a multiplication factor.

11.  A control system according to claim 10, characterized in that the multiplication factor is greater than 1.

12.  A control system according to any of claims 8 to 11, characterized by

a guide device (52) adjustable by an operator for setting a desired value of a guide signal,

first means for generating the control signal mainly as a function of the position signal and the guide value,

second means for generating the control signal mainly as a function of the draft load signal and the guide value and

means through which the first means are rendered operative when the guide device (52) is in a first position range and through which the second means are rendered operative when the guide device (52) is in a second position range.

13.  A control system according to any of claims 8 to 12, characterized by

a guide device (52) adjustable by an operator,

a device (56) adjustable by the operator for generating a mix signal,

means for generating a reference position value, whose magnitude allows it to represent a predeterminable setting range of the guide device (52),

means for generating a reference draft load value which corresponds to the position of adjustment of the guide device (52),

means for generating a draft load error value which corresponds to the difference between the detected and reference draft load values,

means for generating a position error value which corresponds to the difference between the detected and reference position values,

means for generating a sensitivity factor and a gain factor as a function of the setting of the device for generating a mix signal and

means for generating a control signal as a function of the draft load error value, the position error value, the sensitivity factor and the gain factor.

14.  A control system according to claim 13, characterized in that the magnitude of the reference position value SPOS depends merely on the set position of the guide device (52) insofar as the hitch device is in a lower position of its position range.

## Revendications

1.  Système de commande pour un dispositif d'attelage (26) d'un véhicule (10) auquel peut être attelé un équipement de travail du sol, le système de commande étant équipé :

de moyens d'actionnement (34) pour relever et abaisser le dispositif d'attelage (26) sur une plage de positions en fonction de signaux de commande appliqués à une entrée,

de moyens pour déterminer la valeur d'erreur de force de traction DELDRF d'après la différence entre la valeur détectée de force de traction et une valeur de consigne de force de traction réglable par un opérateur,

de moyens pour déterminer une valeur d'erreur de position DEPTHE d'après la différence entre une valeur détectée de position et une valeur de consigne de position du dispositif d'attelage (26),

de moyens pour produire le signal de commande LDERR d'après la valeur d'erreur de force de traction DELDRF, la valeur d'erreur de position DEPTHE et une valeur de sensibilité S ainsi qu'une valeur d'amplification G, selon la relation suivante :

LDERR = G x ((DELDRF x S) + DEPTHE),

caractérisé en ce que G et S sont des valeurs réglables par un opérateur en fonction des exigences, et en ce que sont prévus des moyens (120, 122, 124, 128) pour limiter S et G selon une fonction de la valeur détectée de position du dispositif d'attelage (26), ainsi que des moyens (130) pour limiter S à des valeurs comprises entre environ 0,5 et 2,0.

2. Système de commande selon la revendication 1, caractérisé en ce qu'est prévu un dispositif (56), réglable par l'opérateur, pour produire un signal combiné, et en ce que sont en outre prévus des moyens pour produire une valeur d'amplification comme fonction du signal combiné, et des moyens pour produire une valeur de sensibilité comme fonction du signal combiné.

3. Système de commande selon la revendication 2, caractérisé en ce que les moyens pour produire la valeur d'amplification et la valeur de sensibilité agissent de telle sorte que, lors d'une modification de la valeur combinée au sens d'une augmentation de la valeur de sensibilité, les moyens pour produire la valeur d'amplification augmentent la valeur d'amplification.

4. Système de commande selon l'une quelconque des revendications 1 à 3, comprenant :
un capteur (60) pour produire un signal de réaction FDBK correspondant à une position détectée du dispositif d'attelage (26),
des moyens pour produire un signal de référence R correspondant à une position de référence du dispositif d'attelage (26),
des moyens pour produire un signal d'erreur correspondant à une fonction non linéaire de la différence entre le signal de réaction et le signal de référence, et
des moyens pour transformer le signal d'erreur en un signal de commande.

5. Système de commande selon la revendication 4, caractérisé en ce que le signal d'erreur est déterminé par l'équation :

$$E = G20 - G20 \, (1 - ABS(FDBK - (R \times a)) \times b)^2,$$

où a, b et G20 sont des constantes prédéterminables.

6. Système de commande selon la revendication 4 ou 5, caractérisé en ce que sont prévus des moyens qui rendent le signal d'erreur égal à un signal limite dans la mesure où le signal limite est inférieur au signal d'erreur.

7. Système de commande selon la revendication 6, caractérisé en ce que sont prévus des moyens (51), réglables par un opérateur, pour produire un signal de valeur limite de position correspondant à une position supérieure souhaitée du dispositif d'attelage (26), et en ce que sont prévus des moyens pour produire le signal limite comme fonction non linéaire de la différence entre le signal de réaction et le signal de valeur limite de position.

8. Système de commande selon l'une quelconque des revendications 1 à 7, comprenant :
un capteur de position (60) pour produire un signal de position correspondant à une position détectée du dispositif d'attelage (26), un capteur de force de traction (38) pour produire un signal de force de traction correspondant à la force de traction détectée, laquelle provient de l'interaction du dispositif d'attelage (26) avec le sol, un premier moyen pour produire un signal de commande comme fonction non linéaire du signal de position, et
un deuxième moyen pour produire un signal de commande comme fonction linéaire du signal de force de traction.

9. Système de commande selon la revendication 8, caractérisé par :
un dispositif de commande (52), réglable par un opérateur, pour produire une valeur souhaitée d'un signal de consigne,
un dispositif (56), réglable par l'opérateur, pour produire un signal combiné correspondant au degré souhaité d'influence du signal de position et du signal de force de traction sur le système de commande, des moyens pour produire un signal de commande en fonction du signal de force de traction et de la valeur combinée,
des moyens pour produire un signal de référence d'après le signal de consigne conformément à une première relation, dans la mesure où le dispositif pour produire un signal combiné se trouve dans un premier état, et pour produire le signal de référence d'après le signal de consigne conformément à une deuxième relation, dans la mesure où le dispositif pour produire un signal combiné se trouve dans un deuxième état, et

des moyens pour produire des signaux de commande comme fonction du signal détecté de position et d'un signal de référence.

10. Système de commande selon la revendication 9, caractérisé en ce que, dans le cas où la valeur combinée correspond à une influence maximale du signal de position, le signal de référence est rendu égal à une valeur correspondant à la position du dispositif de commande (52), et en ce que, dans le cas où la valeur combinée ne correspond pas à une influence maximale du signal de position, le signal de référence est rendu égal à une valeur correspondant à la position du dispositif de commande (52) multipliée par un facteur de multiplication.

11. Système de commande selon la revendication 10, caractérisé en ce que le facteur de multiplication est supérieur à 1.

12. Système de commande selon l'une quelconque des revendications 8 à 11, caractérisé par un dispositif de commande (52), réglable par un opérateur, pour produire une valeur souhaitée d'un signal de consigne,

des premiers moyens pour produire le signal de commande principalement comme fonction du signal de position et de la valeur de consigne,

des deuxièmes moyens pour produire le signal de commande principalement comme fonction du signal de force de traction et de la valeur de consigne, et

des moyens qui mettent en action les premiers moyens lorsque le dispositif de commande (52) se trouve dans une première plage de positions, et les deuxièmes moyens lorsque le dispositif de commande (52) se trouve dans une deuxième plage de positions.

13. Système de commande selon l'une quelconque des revendications 8 à 12, caractérisé par un dispositif de commande (52) réglable par un opérateur,

un dispositif (56), réglable par l'opérateur, pour produire un signal combiné,

des moyens pour produire une valeur de position de référence d'une grandeur capable de représenter une plage prédéterminable de réglage du dispositif de commande (52),

des moyens pour produire une valeur de force de traction de référence correspondant à la position réglée du dispositif de commande (52),

des moyens pour produire une valeur d'erreur de force de traction correspondant à la différence entre la valeur détectée et la valeur de force de traction de référence,

des moyens pour produire une valeur d'erreur de position correspondant à la différence entre la valeur détectée et la valeur de position de référence,

des moyens pour produire une valeur de sensibilité et une valeur d'amplification comme fonction du réglage du dispositif pour produire un signal combiné, et

des moyens pour produire un signal de commande comme fonction de la valeur d'erreur de force de traction, de la valeur d'erreur de position, de la valeur de sensibilité et de la valeur d'amplification.

14. Système de commande selon la revendication 13, caractérisé en ce que la grandeur de la valeur de position de référence SPOS dépend exclusivement de la position réglée du dispositif de commande (52), dans la mesure où le dispositif d'attelage se trouve dans une position inférieure de sa plage de positions.

FIG.I

*FIG. 2*

DRAFT 38
POS. LM. 51
LEVER 54
MIX 56
DROP 58
POS. 60

A/D 502

LATCH 504
70
72

EEPROM 506

µP 508

DRIVER 512
DRIVER

420
42b

34
50

**FIG. 3a**

START — 100

INITILIZE HARDWARE & SOFTWARE — 102

START 10 msec LOOP TIMER — 104

FROM ALGOR

WAIT FOR LOOP TIMER TO EXPIRE — 106

RESTART LOOP TIMER — 108

TO ALGOR — 110

# FIG. 3b

*FIG. 3c*

FROM 120

122

DETERMINE
ADJFR

124

CALCULATE
GLIMIT
& SLIMIT

126

CALCULATE
GAIN
FROM MIX

128

LIMIT GAIN
TO
GLIMIT

130

CALCULATE
SENS
FROM MIX

132

LIMIT SENS
TO
SLIMIT

TO 134

EP 0 377 216 B1

FIG. 3d

FROM 132

134
IFLOOR = 1

136
$\dfrac{LEVER}{256} < 64$ ?

NO

YES

138
POS = 1 ?

YES

NO

140
IFLOOR = 0

TO 144

19

## FIG. 3e

FROM 140,142

144

POS = 0

146

SET MIXTHR
=
2 OR 4

148

MIX ≥ MIXTHR
?

NO

YES

150

POS = 1
IFLOOR = 1

TO 152

TO 154

FROM 148       FROM 150

152       154

IS POSFIX = 1 ?    YES   NO    IS POSFIX = 1 ?

NO        156        YES

POSFIX = $\overline{POSFIX}$

**FIG. 3f**

158

CALCULATE
SPOS

160

CALCULATE
DEPTHE

162

SCALE
& LIMIT
TOP

164

CALCULATE
LIMIT &
LIMITUP

TO 166

# FIG. 3g

FROM 164

SET OR CALCULATE
G2OR
166

POSFIX=1
?
168

YES NO

FLOOR = LEVER
170

FLOOR = 3 × LEVER
172

CALCULATE
PERR, PERRUP
174

TO 176

# FIG. 3h

FROM 174

176

CALL : RATELM

178

CALCULATE
DRAFT

180

DELDRF =
DRAFT - LCOM

182

CALCULATE
LERR, LERRUP

TO 184

FROM 182

*184*

ADJUST
LERR

# FIG. 3i

*186*

POS = 1
?

NO

YES

*188*

IFLOOR = 1
?

NO

YES

*190*

NO — LERR>PERR ? — YES

*192*

VCUR = PERR
RAISE = PERRUP
POS = 1

*194*

VCUR = LERR
RAISE = LERRUP
POS = 0

TO 196

FIG. 3j

FROM 192,194

196

COMPARE
VCUR AND
LIMIT

VCUR > LIMIT

VCUR ≤ LIMIT

198

VCUR = LIMIT
RAISE = LIMITUP

200

CALL VALVE

OUTPUT VCUR
TO VALVE

202

TO LOOP

# FIG. 4

EP 0 377 216 B1

# FIG. 5a

FIG. 5b

FROM 332, 334, 336, 340

**FIG. 5c**

342
OLD PERR
< NEW PERR
? — NO

YES

344
PERR =
NEW PERR

348
NEW PERR < 7
? — YES

346
RETURN

NO

350
OLD PERR < 7
? — YES

NO

354
PERR LIM =
STEP/256 +
OLD PERR

352
PERR LIM =
STEP/256 + 7

356
PERR LIM
< NEW PERR
? — NO

YES

360
PERR =
PERR LIM

358
PERR =
NEW PERR

362
RETURN